# EUROPÄISCHE PATENTANMELDUNG

(11) **EP 1 990 379 A2**
(43) Veröffentlichungstag der Anmeldung: **12.11.2008**
(21) Anmeldenummer: 08008497.3
(22) Anmeldetag: 06.05.2008
(51) Int. Cl.: C09D 5/44, C09D 163/00, C08G 59/50

(54) **Tauchlacksystem**

(30) Priorität: 07.05.2007 DE 102007022379
(71) Anmelder: Emil Frei GmbH & Co. KG, 78199 Bräunlingen (DE)
(72) Erfinder: Freidl, Fritz Johann, 3500 Krems (AT); Segin, Andreas, 78183 Hüfingen (DE); Keller, Jochen Michael, (Dipl.-Ing), 78199 Bräunlingen (DE)
(74) Vertreter: Patentanwälte Westphal, Mussgnug & Partner

(57) **Zusammenfassung**

Die vorliegende Erfindung stellt ein Tauchlacksystem für eine kathodische Tauchlackierung auf Basis von modifizierten, Ammoniumgruppen enthaltenden Epoxidharzen zur Verfügung, das auf nicht vorbehandelten Metalloberflächen eine korrosionsfeste Lackschicht liefert mit einer Unterwanderung von weniger als 1 mm bei einer Salzsprühnebelprüfung nach DIN EN ISO 9227 von 750 Stunden.

## Beschreibung

Die vorliegende Erfindung betrifft ein Tauchlacksystem für eine kathodische Tauchlackierung, umfassend ein korrosionsfestes Bindemittel auf Basis von modifizierten, Ammoniumgruppen enthaltenden Epoxidharzen sowie eine Pigmentpaste.

Die kathodische Tauchlackierung basiert auf der elektrophoretischen Anziehung positiv geladener Teilchen an einem als Kathode geschalteten zu beschichtenden Werkstück. Kathodische Tauchlacksysteme bestehen im Wesentlichen aus einem Bindemittel sowie einer Pigmentpaste, die Additive und Füllstoffe umfasst, wobei Bindemittel und Pigmentpaste in der Regel als wässrige Dispersionen eingesetzt werden. Bindemittel und Pigmentpaste basieren dabei üblicherweise auf modifizierten, Ammoniumgruppen enthaltenden Epoxidharzen, wobei die Amingruppen der verwendeten Harze durch niedermolekulare, wasserlösliche Säuren, wie z. B. Essigsäure oder Milchsäure, neutralisiert sind. Die Dispersionen sind in einem pH-Bereich zwischen 4.5 und 6.5 stabil, wobei bevorzugt ein pH-Bereich zwischen 5.8 und 6.2 eingestellt wird.

Die meisten KTL-Harze basieren auf Bisphenol-A-Epoxiden, die mit Polyaminen umgesetzt werden, um ein Produkt mit sekundären und tertiären Amingruppen sowie Hydroxygruppen zu erhalten. Die Salzbildung erfolgt, wie bereits oben erwähnt, mit niedermolekularen organischen Säuren.

Die Vernetzung der Harze wird durch alkohol-blockierte Toluoldiisocyanate erreicht, die bei den angewandten Bedingungen, insbesondere bei leicht sauren pH-Werten, weitgehend stabil sind. Beim Einbrennen der aufgetragenen Schichten reagieren die Isocyanate entweder mit einer sekundären Amingruppe und bilden eine Vernetzung über einen substituierten Harnstoff oder reagieren mit einer Hydroxygruppe eines Alkohols und bilden somit eine Vernetzung über ein Urethan.

Für eine hohe Oberflächenqualität eignen sich speziell geblockte aliphatische Diisocyanate mit acrylischen Harzen, wobei Oxim-geblockte Isocyanate mit Hydroxylgruppen bei niedrigeren Temperaturen vernetzen als vergleichbare alkoholgeblockte aliphatische Isocyanate.

Das eigentliche KTL-Bad besteht üblicherweise aus einer Mischung einer wässrigen Bindemitteldispersion mit einer ebenfalls wässrigen Dispersion einer Pigmentpaste, die ähnlich wie das Bindemittel aufgebaut ist, wobei die Pigmentpaste allerdings neben den zusätzlichen Farbpigmenten auch Füllstoffe und Additive, wie z.B. Netzmittel, Entschäumer, Weichmacher oder auch organische Lösungsmittel, enthalten kann. Im Gegensatz zur Bindemitteldispersion enthält die Dispersion der Pigmentpaste in der Regel kein Vernetzungsmittel.

Pigmentierte Beschichtungen mit Feststoffanteilen bis zu 20% ergeben bereits sehr gute Korrosionsschutzeigenschaften, wobei aminsubstituierte Binder im Harzsystem speziell für die Beschichtung von Stahloberflächen aufgrund der starken Wechselwirkung zwischen den Amingruppen und der meist oxidischen Substratoberfläche besonders gute Schutzeigenschaften aufweisen. Eine gute Adhäsion der aufgetragenen Schicht im feuchten Zustand ist von fundamentaler Bedeutung für eine hohe Korrosionsstabilität. Um eine gute Adhäsion zu erreichen, ist es erforderlich, dass die Tauchlösung eine hohe Penetrationsfähigkeit besitzt und auch Mikroporen oder Rauheiten an der Oberfläche homogen bedeckt. Dabei ist es vorteilhaft, wenn die Tauchlösung eine möglichst geringe Viskosität aufweist. Polare Substituenten ebenso wie Phosphatgruppen verbessern die Adhäsion signifikant. Insbesondere ergeben auf Stahl Zinkeisenphosphat-Konversionsschichten gute Resultate, wobei als Produkt in der Haftschicht Phosphophyllit (Zn₂Fe(PO₄)₂·4H₂O) gebildet wird. So ist es heute insbesondere bei der Tauchlackierung von Karosserieteilen für Kraftfahrzeuge allgemein üblich, das zu beschichtende Werkstück zunächst einer Beschichtung mit Zinkphosphat zu unterziehen, bevor die Elektrotauchlackierung durchgeführt wird. Nur auf diese Weise ist es bisher möglich, eine ausreichend gute Adhäsion an der Oberfläche zu erreichen, um eine hohe Korrosionsstabilität des beschichteten Werkstückes zu gewährleisten.

Allgemein werden von den Lackherstellern einige Anforderungen an derartige kationische Tauchlacke gestellt, die von den heute erhältlichen Tauchlacksystemen mehr oder weniger gut erfüllt werden. So sollte ein derartiges System lösungsmittelarm und frei von Schwermetallen sein. Die Einbrenntemperatur sollte nach Möglichkeit unter 150°C liegen und es sollte ein guter Korrosionsschutz gewährleistet sein. Eine weitere Forderung der Lackhersteller ist, dass sowohl die Herstellung als auch die Verarbeitung des Systems mit möglichst wenig Arbeitsschritten verbunden ist und damit entsprechend kostengünstig ist.

In der EP 0 961 797 B1 wird eine wässrige Bindemitteldispersion für kathodisch abscheidbare Elektrotauchlacke auf der Basis von modifizierten Epoxidharzen, die Ammoniumgruppen enthalten, beschrieben. Dabei wird ein Vorprodukt, das unter Zusatz von Phosphinen und/oder Phosphinsalzen als Katalysator aus einer Diepoxid-Verbindung oder einem Gemisch von DiepoxidVerbindungen mit Monophenol, Diphenol oder einem Gemisch von Mono- und Diphenolen erhalten wird, mit wenigstens einem organischen Amin oder einer Mischung aus organischen Aminen zu einem Epoxidamin-Addukt umgesetzt. Die Bindemitteldispersion selber erhält man anschließend durch Zusatz eines Vernetzungsmittels, anschließender Neutralisierung und Dispergierung der erhaltenen Mischung in Wasser. Durch die vorgegebene Reaktionssequenz bei gleichzeitiger Zugabe von Phosphinen oder Phosphinsalzen als Katalysator kann auf einen Einsatz viskositätssenkender Lösungsmittel größtenteils verzichtet werden und es können Bindemitteldispersionen mit hohen Feststoffgehalten bei gleichzeitig niedriger Viskosität erhalten werden. Damit ist zumindest die Forderung der Lackhersteller nach Lösungsmittelfreiheit weitgehend erfüllt, jedoch besteht weiterhin das Bestreben, den Korrosionsschutz zu verbessern und die Herstellkosten für das Lacksystem selber sowie die Kosten für den Einsatz des Systems zur Herstellung einer korrosionsfesten Beschichtung weiter zu senken.

Ein nicht unwesentlicher Kostenfaktor bei der korrosionsfesten Beschichtung von Stahloberflächen durch kathodische Elektrotauchlackierungen ist darauf zurückzuführen, dass die konventionellen Bindemittel nur unzureichend an der Stahloberfläche selber haften, um anschließend eine ausreichend dichte Schicht zu liefern, die einen umfassenden Korrosionsschutz gewährleistet. So ist es deshalb üblich, die Stahloberfläche zunächst einer Vorbehandlung zu unterziehen und die entsprechend behandelte Oberfläche erst dann bspw. einer kathodischen Tauchlackierung auszusetzen. Üblicherweise wird die Stahloberfläche mit einer Zinkphosphatschicht versehen, die ausreichend aktive Gruppen aufweist, um das Bindemittel an der Oberfläche zu fixieren. Die Zinkphosphatierung ist als zusätzlicher Arbeitsschritt der Elektrotauchlackierung vorgeschaltet und generiert entsprechende Kosten.

In der US 5,789,468 wird eine verbesserte wässrige Zusammensetzung aus einem Binder, einem Epoxyamin-Addukt und einem blockierten Polyisocyanat für die kathodische Elektrotauchlackierung beschrieben, wobei die Verbesserung darin besteht, dass die Zusammensetzung ein Polyoxyalkylendiamin umfasst, das als Antikratermittel die Eigenschaften des Elektrotauchlackes positiv beeinflusst und für eine glatte und ebene Oberfläche sorgt. Bei einer bevorzugten Ausführungsform enthält die E-lektrotauchlackzusammensetzung 0.01 bis 8 Gew.-% Glycydoxyalkylalkoxysilan, das mit den Amingruppen des Epoxyamin-Adduktes eine Reaktion eingeht. Mit Hilfe des Epoxysilans kann die Adhäsion bzw. Bindung an der Metalloberfläche verbessert werden und damit die Korrosionsfestigkeit erhöht werden. Trotz dieser Verbesserung der Adhäsion an der Metalloberfläche ist es weiterhin erforderlich, eine Vorbehandlung vorzunehmen, um eine ausreichende Korrosionsfestigkeit zu erreichen.

Es besteht somit weiterhin das Problem, dass die Metalloberfläche einer aufwändigen Vorbehandlung, wie z. B. einer Zinkphosphatierung, unterzogen werden muss, um anschließend bei der Elektrotauchlackierung eine korrosionsfeste Beschichtung zu erhalten.

Aufgabe der Erfindung ist es, ein Tauchlacksystem, das ein Bindemittel und eine Pigmentpaste umfasst, zur Verfügung zu stellen, mit dessen Hilfe eine korrosionsfeste Schicht ohne vorherige Vorbehandlung auf eine Metalloberfläche aufgebracht werden kann.

Gelöst wird diese Aufgabe durch ein Tauchlacksystem für eine kathodische Tauchlackierung mit den Merkmalen des Anspruchs 1.

Es ist eine weitere Aufgabe der Erfindung, ein einfaches und unkompliziert durchzuführendes Verfahren zur Herstellung eines Tauchlacksystems zur Verfügung zu stellen, mit dessen Hilfe eine direkte korrosionsfeste Beschichtung von Oberflächen, insbesondere Metalloberflächen, möglich ist.

Gelöst wird diese Aufgabe durch ein Verfahren mit den Merkmalen des Anspruchs 15.

Es ist eine weitere Aufgabe der vorliegenden Erfindung, Parameter für die Verwendung eines Tauchlacksystems zur Verfügung zu stellen, die es erlauben, eine direkte korrosionsfeste Beschichtung einer Metalloberfläche zu erhalten.

Gelöst wird diese Aufgabe durch eine Verwendung des erfindungsgemäßen Tauchlacksystems nach einem Verfahren mit den Merkmalen der Ansprüche 21 und 22.

Bevorzugte Ausführungsformen des Tauchlacksystems, seiner Herstellung und seiner Verwendung sind in den entsprechenden Unteransprüchen wiedergegeben.

Auf der Suche nach einem verbesserten Tauchlacksystem für eine kathodische Tauchlackierung wurde gefunden, dass eine Zusammensetzung, die ein Bindemittel auf Basis von modifizierten, Ammoniumgruppen enthaltenden Epoxidharzen sowie eine Pigmentpaste umfasst, außerordentlich korrosionsfeste Lackschichten liefert, wenn das Bindemittel zusätzlich mindestens ein Organosilan, das keine Epoxidreaktion eingeht, umfasst.

Das Bindemittel selber wird durch Umsetzung von mindestens einer Diepoxidverbindung oder einem Gemisch aus Diepoxidverbindungen mit mindestens einem Mono- und/oder Diphenol oder einem Gemisch aus Mono- und/oder Diphenolen in Gegenwart eines Katalysators uns anschließende Umsetzung der so erhaltenen Mischung mit mindestens einem organischen Amin oder eine Mischung aus organischen Aminen und mindestens einem Vernetzungsmittel erhalten. Als Katalysator wird vorzugsweise ein organisches Phosphin und/oder Phosphinsalz eingesetzt. Diese Reaktionsmischung wird mit einer organischen Säure neutralisiert und anschließend mit Wasser umgesetzt. Die auf diese Weise erhaltene wässrige Bindemitteldispersion bildet den Bindemittelanteil des Tauchlacksystems.

Die zweite Hauptkomponente des Tauchlacksystems ist die Pigmentpaste, die üblicherweise aus wenigstens einem Reibharz, Pigmenten, Füllstoffen, Additiven und Lösungsmittel besteht. Bindemittel und Pigmentpaste sind aufeinander abgestimmt und werden zur Tauchlackierung in einem bestimmten Verhältnis miteinander vermischt, mit Wasser verdünnt und als sog. KTL-Tauchbad eingesetzt.

Als Diepoxidverbindung können zur Herstellung des Bindemittels sowie des Reibharzes alle Verbindungen eingesetzt werden, die zwei reaktive Epoxidgruppen enthalten. Besonders bevorzugte Epoxidverbindungen sind Diglycidylether von Polyphenolen, wie z. B. Bisphenol A und Bisphenol F, mehrwertigen Alkoholen, wie z. B. Ethylenglykol, Diethylenglykol, Triethylenglykol, 1,2-Propylenglykol, 1,5-Pentadiol, 1,2,6-Hexantriol, Glyzerin etc., und Polycarbonsäuren, wie z. B. Oxalsäure, Bernsteinsäure, Glutarsäure, Terephthalsäure, 2,6-Naphthalindicarbonsäure etc. Darüber hinaus sind Hydantoinexpoxide, epoxidiertes Polybutadien und Diepoxidverbindungen geeignet, die durch Epoxidierung von olefinisch ungesättigten alicyclischen Verbindungen erhalten werden. Als Mono- oder Diphenolkomponente können beliebige Mono- oder Diphenole, wie z. B. Bisphenol A oder ein Gemisch aus Bisphenol A und Nonylyphenol eingesetzt werden.

Im ersten Schritt zur Herstellung des Bindemittels wird die Diepoxidverbindung oder das Gemisch aus Diepoxidverbindungen mit dem Mono- bzw. Diphenol in Gegenwart eines Katalysators, wie z.B. eines organischen Phosphins oder Phosphinsalzes, bei Temperaturen unterhalb von 160°C umgesetzt. Bevorzugt werden als Katalysator niedrige Trialkylphosphine oder Alkylphenylphosphine eingesetzt. Ein besonders bevorzugter Katalysator ist Triphenylphosphin.

Das so erhaltene Gemisch wird anschließend bei Temperaturen zwischen 80°C und 180°C mit mindestens einem organischen Amin oder einer Mischung aus organischen Aminen zu einem Epoxidamin-Addukt umgesetzt. Beispiele für derartige Amine sind Mono- oder Dialkylamine, wie z. B. Methylamin, Ethylamin oder Diethylamin. Geeignet sind aber auch Alkanolamine oder Dialkylaminoalkyamine, wie z. B. Dimethylaminoethylamin oder N,N-Dimethylaminopropylamin.

Vor oder nach der Zugabe des Amins können ggf. noch Weichmacher, Entschäumer, Netzmittel bzw. nicht flüchtige Verdünnungsmittel auf Basis von mono- oder polyfunktionellen Alkoholen zugesetzt werden. Anschließend wird das so erhaltene Bindemittel mit einem Vernetzungsmittel versetzt, wobei als Vernetzungsmittel alle mit Hydroxylgruppen reagierende multifunktionelle Verbindungen eingesetzt werden können. Bevorzugt werden Polyalkohole und Polyphenole eingesetzt. Besonders bevorzugte Vernetzungsmittel sind blockierte Polyisocyanate, bei denen die Isocyanatgruppen mit einer geeigneten reaktiven Verbindung umgesetzt worden sind, um das Polyisocyanat gegenüber Hydroxylgruppen bei Raumtemperatur zu stabilisieren. Erst bei höheren Temperaturen wird dann durch Reaktion die Vernetzung des Binders eingeleitet.

Für die Blockierung der Polyisocyanate können beliebige aliphatische, cycloaliphatische oder aromatische Alkylmonoalkohole verwendet werden. Geeignete Blockierungsmittel sind auch Hydroxylamine oder Amine. Besonders bevorzugte Blockierungsmittel sind Oxime wie Methylenethylketonoxim, Acetonoxim, Butanonoxim und Cyclohexanonoxim. Ein Vorteil der Oxime besteht darin, dass sie bei relativ tiefen Temperaturen die blockierte Isocyanatgruppe freigeben und damit die Vernetzung einleiten.

Zur Verkappung bzw. Blockierung der Isocyanatgruppe wird das Polyisocyanat in einem organischen Lösungsmittel in Gegenwart eines Katalysators mit einem Oxim umgesetzt. Geeignete Katalysatoren für diese Reaktion sind ein- oder mehrwertige Metallsalze oder Metalloxide, insbesondere Oktoate, Hexoate oder Laurate des Wismuts oder Zinns, aber auch Säurekatalysatoren, wie z.B. Dinonylnaphthalindisulfonsäure (DNNDSS), Dinonylnaphthalinmonosulfonsäure (DNNSS), Dodecylbenzolsulfonsäure (DDBSS), para-Toluolsulfonsäure (p-TSS)oder Phosphorsäure.

Vor oder nach Zugabe des Vernetzungsmittels wird dem Binder ein Organosilan zugegeben, das mit Epoxidharzen keine Epoxidreaktion eingeht, und somit monomer in der Bindemittelzusammensetzung vorliegt. Bevorzugte Organosilane sind Aminoalkyl- oder Aminoalkylalkoxysilane mit der allgemeinen Formel

R₂N[(CH₂)ₓRN]ₙ(CH₂)_{y}SiR¹ₘ(R²)₍₃₋ₘ₎,

worin die Gruppen R gleich oder verschieden sind und R für Wasserstoff oder eine lineare oder verzweigte Alkylgruppe mit 1 bis 8 C-Atomen oder eine Aminoalkylgruppe der Form R₂N(CH₂)ₓ steht, R¹ eine lineare, cyclische oder verzweigte Alkylgruppe mit 1 bis 8 C-Atomen und R² eine Alkoxygruppe oder Acetoxygruppe darstellen, x eine ganze Zahl von 1 bis 4 und y eine ganze Zahl von 1 bis 16 sowie n gleich 0, 1, 2 oder 3 und m gleich 0, 1 oder 2 ist.

Besonders bevorzugt werden Aminoalkylalkoxysilane, wie z. B. 3-Aminopropyltrimethoxysilan, 3-Aminopropyltriethoxysilan, 3-Aminopropylmethyldimethoxysilan,
3-Aminopropylmethyldiethoxysilan,
N-(2-Aminoethyl)-3-Aminopropyltrimethoxysilan etc. eingesetzt. Es können auch vorteilhaft Gemische aus Aminoalkylsilanen oder Kondensate oder Co-Kondensate eingesetzt werden.

Bei einer vorteilhaften Ausgestaltung der vorliegenden Erfindung wird nach Zugabe des Vernetzungsmittels zusätzlich ein weiteres Amin zugegeben. Vorzugsweise wird als weiteres Amin Diketimin und/oder Methylethanolamin eingesetzt.

Die so erhaltene Bindemittelzusammensetzung wird anschließend mit einer organischen Säure neutralisiert. Als bevorzugte Säuren werden dazu Essigsäure, Ameisensäure, Milchsäure oder Propionsäure verwendet. Die neutralisierte Mischung wird mit Wasser zu einer Dispersion umgesetzt, wobei ein bevorzugter Feststoffanteil von ca. 40 Gew.-% angestrebt wird.

Während bei der konventionellen Herstellung von Bindemitteldispersionen die Dispergierung üblicherweise durch Einrühren der neutralisierten Mischung in Wasser erfolgt, sieht das erfindungsgemäße Verfahren vor, dass die Dispergierung durch Zugabe von Wasser zur neutralen Mischung erfolgt, was den Vorteil hat, dass die gesamte Bindemittelherstellung in einer Eintopfreaktion abläuft und damit verfahrenstechnische Vorteile gegenüber den konventionellen Verfahren aufweist, was sich dementsprechend günstig auf die Herstellkosten auswirkt.

Neben dem Bindemittel bildet die sogenannte Pigmentpaste den zweiten Hauptbestandteil des Tauchlacksystems. Eine Pigmentpaste besteht üblicherweise aus einem Reibharz, Pigmenten, Füllstoffen und Additiven, wie z. B. Netzmittel, Entschäumer oder organische Lösungsmittel, sowie Wasser und mindestens einer organischen Säure.

Das Reibharz ist ähnlich aufgebaut wie das Bindemittel und wird durch Umsetzung eines Gemischs aus Diepoxidverbindungen mit zumindest einem Mono- und/oder Diphenol oder einem Gemisch aus Mono- und/oder Diphenol in Gegenwart eines Katalysators und anschließender Umsetzung des so erhaltenen Produktes mit mindestens einem organischen Amin erhalten. Eine bevorzugte Ausführungsform sieht vor, dass dem Reibharz zusätzlich ein Organosilan zugegeben wird, insbesondere ein Organosilan, das mit dem Epoxidharz keine Epoxidreaktion eingeht, wobei besonders bevorzugt Aminoalkyl- oder Aminoalkylalkoxysilane eingesetzt werden.

Durch Neutralisieren des Reibharzes mit einer organischen Säure, wie z. B. Essigsäure, Ameisensäure oder Propionsäure, und anschließendes Dispergieren in Wasser unter gleichzeitiger Zugabe von Füllstoffen, Pigmenten und Additiven, wie z. B. Netzmitteln, Entschäumern und/oder Lösungsmitteln, erhält man schließlich die Pigmentpaste.

Als Epoxidbasis für die Pigmentpaste kommen die gleichen Diepoxidverbindungen in Frage wie bei der Herstellung der Bindemitteldispersion. So können bevorzugt Diglycidylether von Polyphenolen, Polyalkoholen oder Polycarbonsäuren eingesetzt werden. Als besonders bevorzugte Diphenol-Komponente wird auch für das Reibharz Bisphenol A bzw. ein Gemisch aus Bisphenol A und Nonylphenol eingesetzt. Auch die für das Reibharz verwendeten Katalysatoren sind identisch mit denen, die für das Bindemittel eingesetzt werden. So wird in einer bevorzugten Ausführungsform Triphenylphosphin als Katalysator verwendet. Das gleiche gilt für die zu verwendenden organischen Amine. Es kommen die gleichen Amine in Frage, die bereits in Bezug auf das Bindemittel genannt wurden.

In der Regel wird das Epoxidharzsystem des Bindemittels und das der Pigmentpaste aufeinander abgestimmt und es werden bewusst die gleichen oder ähnliche Komponenten benutzt, mit der Ausnahme, dass in der Regel der Pigmentpaste keine Vernetzungsmittel zugesetzt werden.

Die Neutralisierung des Reibharzes erfolgt durch Zugabe von organischen Säuren, wie z. B. Propionsäure, Milchsäure, Essigsäure oder Ameisensäure. Die Dispergierung der neutralisierten Mischung kann durch Einrühren in Wasser unter gleichzeitiger Zugabe von Füllstoffen, Pigmenten und Additiven, wie z.B. Netzmitteln oder Entschäumern, sowie Lösungsmitteln erfolgen. Auch im Falle der Pigmentpaste ist es möglich, durch Zugabe des Wassers und den sonstigen Additiven zum Reibharz zu einer Dispersion mit guter Scherstabilität zu kommen.

Bei einer vorteilhaften Ausführungsform der vorliegenden Erfindung enthält die Pigmentpaste zusätzlich ein Organosilan, insbesondere ein Aminoalkylsilan oder ein Aminoalkylalkoxysilan. Zwar werden für die Pigmentpaste bevorzugt solche Organosilane eingesetzt, die mit den Epoxidharzkomponenten keine Epoxidreaktion eingehen, es ist jedoch auch möglich, an dieser Stelle Glycidoxyalkylpolyalkoxysilane einzusetzen, die mit den Epoxydharzen reagieren und im Wesentlichen dann als Antikratermittel wirken.

Als Füllstoffe können die üblichen Füllstoffe auf Basis von Kaolin, Quarzsand oder Tonen eingesetzt werden. Eine bevorzugte Ausführungsform sieht vor, silan-modifizierte Füllstoffe einzusetzen, bei denen die Oberflächen mit einem Organosilan, wie z. B. Vinylsilan, Aminosilan, Epoxidsilan, Mercaptosilan und/oder Tetrasulfansilan aktiviert sind.

Die Pigmentpasten weisen üblicherweise einen Feststoffanteil von ca. 70% auf und werden zur Tauchlackierung mit der Bindemitteldispersion vermischt und mit Wasser in Gegenwart von Säure verdünnt, wobei die Zielsetzung ist, ein Tauchbad mit ca. 8 bis 24 Gew.% Feststoffanteil zu erhalten, wie es üblicherweise für die kathodische Tauchlackierung eingesetzt wird. Bei einer bevorzugten Ausführungsform werden beispielsweise drei Teile Bindemitteldispersion mit einem Teil Pigmentpaste zu einem Elektrotauchbad mit ca. 10 bis 20% Feststoffgehalt kombiniert. Die kationische Tauchlackierung selber wird dann bei Spannungen zwischen 10 und 400 V durchgeführt.

Mit Hilfe der erfindungsgemäßen Zusammensetzungen für die Bindemitteldispersion sowie die Pigmentpaste gelingt es, die Einbrenntemperatur des unter diesen Bedingungen erhaltenen Lackfilms unter 150°C, vorzugsweise unter 130°C, zu senken. Dies hat gegenüber den sonst üblichen Einbrenntemperaturen von ca. 180°C nicht nur den Vorteil, dass Energiekosten gespart werden, sondern es kommt noch hinzu, dass sich durch die niedrigen Einbrenntemperaturen erhebliche verfahrenstechnische Vorteile ergeben, die dann wiederum eine entsprechende Reduzierung der Kosten mit sich bringen.

Neben der speziellen Bindemittel- und Pigmentpastenzusammensetzung dürfte der Hauptgrund für die niedrigen Einbrenntemperaturen auf das mit Oximen blockierte Polyisocyanat als Vernetzungsmittel zurückzuführen sein.

In der Praxis sind eine Reihe von Tests entwickelt worden, um die Qualität eines Tauchlacksystems zu beurteilen. So kann beispielsweise der Korrosionsschutz durch eine sog. Salzsprühnebelprüfung nach DIN 50 021 SS (DIN EN ISO 9227), einen Kondenswasser-Konstant-Klimatest nach DIN 50 017 KK oder einen VDA-Wechseltest nach VDA 621-415 getestet werden.

Auch für die mechanischen Eigenschaften der erhaltenen Lackschicht stehen unterschiedliche Testmethoden zur Verfügung. So können die mechanischen Eigenschaften durch einen sog. Gitterschnitt nach DIN EN ISO 2409, mit der Dornbiegung nach ASTM-D 522-41 (DIN EN ISO 1519), der Erichsentiefung nach DIN EN ISO 1520, der Schlagtiefung nach DIN EN ISO 6272 oder mit dem sog. Steinschlagtest nach DIN 55 996-1 geprüft werden.

Ein weiteres wichtiges Kriterium ist die Beständigkeit gegenüber Chemikalien, die nach VDA 621-412 geprüft werden kann.

Die oben genannten Prüfverfahren sind eine willkürliche Auswahl aus einer Vielzahl von möglichen Tests und Prüfungen, mit denen die Qualität von Lacksystemen bestimmt werden kann. Eines der wichtigsten Kriterien insbesondere für Elektrotauchlacke, die zur Lackierung von Karosserieteilen für Automobile eingesetzt werden, ist die oben genannte Salzsprühnebelprüfung nach DIN 50 021 SS (DIN EN ISO 9227).

Mit dem erfindungsgemäßen Tauchlacksystem gelingt es, auf nicht vorbehandeltem Normalstahl eingebrannte Lackschichten zu erhalten, die in der Salzsprühnebelprüfung nach DIN 50 021 SS nach einer Prüfdauer von 750 Stunden eine Korrosionsbeständigkeit mit einer Unterwanderung von weniger als 1 mm aufweisen. Unter einem nicht vorbehandelten Normalstahl wird in diesem Zusammenhang ein Normalstahl verstanden mit einer Metalloberfläche, die lediglich gereinigt wurde, aber keiner zusätzlichen Behandlung, wie z. B. einer Zinkphosphatierung, unterzogen wurde.

Diese überraschend gute Korrosionsfestigkeit ist wahrscheinlich darauf zurückzuführen, dass das bevorzugt eingesetzte Organosilan, das keine Epoxidreaktion eingeht, in der Bindemitteldispersion oder auch in der Pigmentpaste monomer vorliegt und aufgrund der Molekülgröße vor den Bindemittelmolekülen an der Metalloberfläche abgeschieden werden kann. Es besteht so die Möglichkeit, auf diese Weise eine Aktivierung der Metalloberfläche zu erreichen, wodurch das später an der Oberfläche eintreffende Bindemittel- oder Reibharzmolekül eine entsprechend aktivierte Metalloberfläche vorfindet, an der es auf einfache Weise fest angelagert werden kann.

Für diese Theorie sprechen Versuche, die mit unterschiedlichen Abscheidungsspannungen durchgeführt wurden. Bei derartigen Versuchen wurde festgestellt, dass eine weitere Verbesserung der Korrosionsbeständigkeit erreicht wird, wenn die Abscheidung des Lackes stufenweise bei unterschiedlichen Spannungen erfolgt. Dabei wurde zunächst mit einer Spannung zwischen 10 und 100 V gearbeitet, bei der üblicherweise noch keine vollständige Lackschicht abgeschieden wird. In diesem Spannungsbereich erfolgt offensichtlich eine Silanisierung der Metalloberfläche. Die Aufbringung des Lackfilms wurde anschließend bei einer Spannung zwischen 100 und 400 V durchgeführt. Weitere Versuche wurden mit periodisch wechselnden Spannungsbereichen durchgeführt, wobei pulsierend zwischen einem unteren Spannungsbereich von 10 bis 100 V und einem oberen Spannungsbereich von 100 bis 400 V gewechselt wurde.

In beiden Fällen wurde eine deutliche Verbesserung der Korrosionsbeständigkeit der so abgeschiedenen Lackschichten festgestellt.

Neben der Aktivierung der Metalloberflächen scheinen die zugesetzten Organosilane auch eine Aktivierung der Lackoberfläche selber zu bewirken. So wurde überraschenderweise festgestellt, dass zwischen den über die Tauchlackierung erhaltenen Lackschichten, die üblicherweise als Primer oder Grundierung eingesetzt fungieren, und den Decklacken, eine deutliche Verbesserung der Haftung erreicht wird, wenn Tauchlacksysteme eingesetzt werden, denen Organosilane, wie z.B. Aminoalkylsilane und/oder Aminoalkylalkoxysilane, zugesetzt wurden.

Im Folgenden wird die vorliegende Erfindung anhand von Beispielen näher erläutert.

### Beispiele

### Beispiel 1 (Vernetzungsmittelzusammensetzung, IC1)

In einem mit einem Rührer, Rückflusskühler und Tropftrichter ausgestatteten Reaktionsbehälter werden 353 Gewichtsanteile wasserfreies Aceton vorgelegt und mit 520.0 Gewichtsanteilen eines aromatischen Polyisocyanats auf der Basis von Diphenylmethanisocyanat (Desmodur VL 51, Bayer AG) und 1 Gewichtsanteil Dibutylzinnlaurat (Tegokat 218, Goldschmidt) versetzt. Bei Raumtemperatur werden 365.8 Gewichtsanteile 2-Butanonoxim zugetropft, wobei die Temperatur der exothermen Reaktion bei ca. 40 °C gehalten wird. Anschließend wird das Reaktionsgemisch für weitere 3 Stunden bei 50 °C gerührt und dann über Nacht stehengelassen.

### Beispiele 2 - 3 (Vernetzungsmittelzusammensetzungen IC2, IC3)

In Anlehnung an das oben beschriebene Verfahren werden die Vernetzungsmittelzusammensetzungen IC2 und IC3 aus denen in der folgenden Tabelle aufgeführten Ausgangsmaterialien hergestellt. Wesentlich bei der Herstellung der Vernetzungsmittel ist, dass die Temperatur der exothermen Reaktion bei ca. 40 °C gehalten wird.

**Tabelle 1, Vernetzungsmittel**

| Ausgangsstoffe | | Vernetzungsmittelzusammensetzung (Gewichtsanteile) | | |
|---|---|---|---|---|
| | | IC1 | IC2 | IC3 |
| Lösungsmittel | Aceton | 353 | - | - |
| | Methylisobutylketon | - | - | 330 |
| Isocyanat | Desmodur VL 51 | 520 | 780 | 480 |
| Katalysator | Dibutylzinnlaurat | 1 | 3 | 0.1 |
| Verkappungsmittel | 2-Butanonoxim | 365.8 | 575 | - |
| | Butyldiglykol | - | 55 | 492 |
| | Diethylenglykolmonobutylether | - | 120 | - |
| Sonstige | Trimethylolpropan | - | - | 20 |
| | 2-Butanol | - | - | 3.5 |

### Beispiel 4 (Bindemitteldispersion A)

In einem mit Rührer, Rückflusskühler, Thermometer und Gaseinleitungsrohr ausgestatteten, beheizbaren Reaktor werden 100.4 Gewichtsanteile eines Bisphenol-A-Harzes (Epilox 13-42, LEUNA) mit einem Epoxidäquivalent von 328, 507.6 Gewichtsanteile eines zweiten Bisphenol-A-Harzes (Epilox 19-04, LEUNA) mit einem Epoxidäquivalent von 184, mit 110.0 Gewichtsanteilen Nonylphenol und 14.0 Gewichtsanteilen Bisphenol A vermischt, auf 115 °C aufgeheizt und mit 1.6 Gewichtsanteilen Triphenylphosphin als Katalysator versetzt. Es setzt eine exotherme Reaktion ein, bei der die Temperatur des Reaktionsgemisches auf 155 °C steigt. Die Temperatur der Reaktionsmischung wird für eine Stunde unter Rühren bei 155 °C gehalten, anschließend werden 148.7 Gewichtsanteile eines Polypropylenglykols (Pluriol P 900, BASF) zugesetzt und die Temperatur der Mischung wird auf 100 °C gekühlt. Nach dem Abkühlen werden 52.5 Gewichtsanteile Diethanolamin zugetropft. Während des Zutropfens wird die Temperatur, die bei der Reaktion des Amins leicht ansteigt, auf 110 - 115 °C gehalten. Nachdem die Temperatur nach dem Zutropfen für weitere 15 Minuten auf 110 - 115 °C gehalten wurde, werden 25.5 Gewichtsanteile N,N-Dimethylaminopropylamin langsam zugetropft, wobei darauf geachtet wird, dass die Temperatur der stark exothermen Reaktion nicht über 130 °C ansteigt. Anschließend wird das Reaktionsgemisch für 1 Stunde unter Rühren bei 130 °C gehalten. Danach werden 17.0 Gewichtsanteile eines Bisphenol-A-Alkoxylats (Macol RD 209 EP, BASF) zugesetzt und man lässt die Mischung für eine weitere Stunde bei 130 °C weiterreagieren. Die Mischung wird dann während der Zugabe von 60.0 Gewichtsanteilen Butylglykol unter Kühlen auf 115 °C gebracht und dann mit 484.0 Gewichtsanteilen der Vernetzungszusammensetzung IC1 versetzt. Dem Reaktionsgemisch werden nun 7.0 Gewichtsanteile eines Aminomethylsilans (Silan 270, Degussa) und anschließend bei 100 °C 8.0 Gewichtsanteile eines Netzmittels (Surfynol 104, Air-Products) zugegeben.

Die Reaktionsmischung wird mit 520.0 Gewichtsanteilen 5-%iger Essigsäure bei 80 - 90 °C neutralisiert und in die neutralisierte Mischung werden 1600.0 Gewichtsanteile destilliertes Wasser eingerührt und für 30 Minuten bei ca. 75 °C weiter gerührt. Nach dem Abkühlen wird die Mischung über einen befeuchteten Filter T-1000 (Fa. Seitz) filtriert.

### Beispiele 5 - 6 (Bindemitteldispersionen B und C)

In Anlehnung an das Beispiel 4 werden aus den nachfolgend aufgelisteten Rohstoffen die Bindemitteldispersionen B und C hergestellt.

Das bei der Bindemitteldispersion C eingesetzte als 2. Amin Diketimin wurde durch die Umsetzung von 44 Gewichtsanteilen Diethylentriamin mit 87 Gewichtsanteilen Methylisobutylketon unter Stickstoff im Vakuum erhalten.

**Tabelle 2, Bindemitteldispersionen (Transparentpasten)**

| Ausgangsstoffe | | Bindemittelzusammensetzung (Gewichtsanteile) | | |
|---|---|---|---|---|
| | | A | B | C |
| Epoxidharz 1 | Epilox 13-42 | 100.4 | 338 | - |
| Epoxidharz 2 | Epilox 19-04 | 507.6 | 98 | 492 |
| Phenolkomponente | Nonylphenol | 110 | 47 | |
| | Bisphenol A | 14 | 42 | 142 |
| | Ethoxyliertes Bisphenol A (Synfac 8009. RTM) | - | - | 178 |
| Katalysator | Triphenylphosphin | 1.6 | 3 | 0.1 |
| Amin 1 | Dimethylbenzylamin | - | - | 2 |
| | 2,2-Aminoethanol | 52.7 | 22 | - |
| | N,N-Dimethylaminopropylamin | 25.5 | 20 | - |
| Silan | Silane 270 DEG | 7.0 | - | - |
| | Aminopropyltriethoxysilan (Z-6011) | - | 10 | 20 |
| Sonstige | Pluriol P 900 | 148.7 | 137 | - |
| | Macol RD 209 EP | 17 | 30 | - |
| | Butylglykol | 60 | 20 | - |
| Additive | Surfynol 104 | 8 | 26 | - |
| Vernetzungsmittel | IC1 | 442 | - | - |
| | IC2 | - | 380 | - |
| | IC3 | - | - | 690 |
| Amin 2 | Diketimin | - | - | 56 |
| | Methylethanolamin | - | - | 48 |
| Säure | Essigsäure | 520 | 480 | 480 |
| Wasser | | 1600 | 1500 | 1500 |

### Beispiel 7 (Reibharz R1)

In einem mit einem Rührer, Rückflusskühler und Thermometer ausgestatteten, beheizbaren Reaktor werden 366 Gewichtsanteile eines Bisphenol-A-Harzes (Epilox 19-04, LEUNA) mit einem Epoxidäquivalent von 184, 11 Gewichtsanteile Bisphenol A und 110 Gewichtsanteile Nonylphenol vermischt, auf 115 °C erhitzt und mit 0.8 Gewichtsanteilen Triphenylphosphin versetzt. Das Reaktionsgemisch wird unter Rühren bei 155 °C mit einem zweiten Bisphenol-A-Harz (Epilox 13-42, LEUNA) versetzt und die Mischung wird bei 155 °C für 1 Stunde gerührt und anschließend auf 110 °C abgekühlt. Nach dem Abkühlen werden 52.5 Gewichtsanteile 2,2-Aminoethanol zugetropft. Während des Zutropfens wird die Temperatur, die bei der einsetzenden Reaktion des Amins leicht ansteigt, auf 110 - 115 °C gehalten. Nachdem die Temperatur nach dem Zutropfen für weitere 15 Minuten auf 110 - 115 °C gehalten wurde, werden 25.5 Gewichtsanteile N,N-Dimethylaminopropylamin langsam zugetropft, wobei darauf geachtet wird, dass die Temperatur der stark exothermen Reaktion nicht über 130 °C ansteigt. Danach werden 7.4 Gewichtsanteile eines Aminomethylsilans (Silan 270, Degussa), 420 Gewichtsanteile Butylglykol sowie 3.0 Gewichtsanteile eines Netzmittels (Surfynol 104, Air Products) zugegeben und man lässt das Reaktionsgemisch unter Rühren abkühlen.

### Beispiele 8 - 10 (Wässrige Pigmentpasten)

Durch Neutralisieren des Reibharzes mit Essigsäure und Dispergieren in Wasser werden wässrige Dispersionen hergestellt, die mit den in der folgenden Tabelle 3 aufgeführten Additiven in Perlmühlen zu Pigmentpasten weiterverarbeitet werden.

**Tabelle 3, Pigmentpasten**

| Ausgangsstoffe | Pigmentpastenzusammensetzungen (Gewichtsanteile) | | |
|---|---|---|---|
| | PP1 (hellgrau) | PP2 (schwarz) | PP3 (schwarz) + Silan |
| Reibharz | 17.0 | 16.0 | 16.0 |
| Aluminiumsilikatpigment | 20.0 | 17.0 | 12.0 |
| Titanoxid | 24.0 | - | - |
| Bariumsulfat | - | 20.0 | 15.0 |
| Ruß | 0.24 | 3.0 | 3.0 |
| Wasser | 18.8 | 17.9 | 17.9 |
| Essigsäure | 1.1 | 1.3 | 1.3 |
| 1-Methoxy-2-propanol | 2.0 | 2.5 | 2.5 |
| Surfynol 104 | 0.3 | 0.3 | 0.3 |
| Silan* | - | - | 10.0 |

| | | | |
|---|---|---|---|
| * Silan = | | | |

### Beispiel 11 (Tauchlackierung)

Die in den Beispielen aufgeführten Bindemitteldispersionen und Pigmentpasten werden zu den in der Tabelle 4 beschriebenen Tauchlackbädern kombiniert. Dabei wird die Bindemitteldispersion vorgelegt und mit entionisiertem Wasser verdünnt, anschließend wird unter Rühren die Pigmentpaste eingetragen.

**Tabelle 4, Tauchbadkombinationen**

| Ausgangsstoffe | | Tauchlackbadzusammensetzungen (Gewichtsanteile) | | |
|---|---|---|---|---|
| | | T1 (hellgrau) | T2 (schwarz) | T3 (schwarz) + Silan |
| Bindemittel | A | 1590 | - | - |
| | B | - | 1820 | - |
| | C | - | - | 1820 |
| Pigmentpaste | PP1 | 530 | - | - |
| | PP2 | - | 455 | - |
| | PP3 | - | - | 455 |
| Wasser | | 2877 | 2722 | 2722 |
| Säure | | 3 | 3 | 3 |

### Beispiel 12 (Tauchlackierung)

Die Abscheidung der Lacke erfolgt unter den in der Tabelle 5 angegebenen Bedingungen auf nicht vorbehandelten, alkalisch gereinigten Normalstahlprüftafeln

**Tabelle 5, Kenndaten KTL-Bad**

| Parameter | Kenndaten Tauchlack | | |
|---|---|---|---|
| | T1 | T2 | T3 |
| pH-Wert | 4.6 - 5.1 | 4.8 - 5.5 | 4.8 - 5.5 |
| Temperatur (°C) | 28 | 28 | 28 |
| Feststoffanteil | 17 % | 18 % | 18 % |
| Abscheidespannung | | | |
| Abscheideprogramm | 2 min Hochlaufzeit | 2 min Hochlaufzeit | 2 min Hochlaufzeit |
| org. Lösungsmittel | 2 % | 2 % | 2 % |
| MEQ | 5.0 - 5.8 | 5.5 - 6.5 | 5.5 - 6.5 |

Die Eigenschaften der unter den in Tabelle 5 angegeben Bedingungen erhalten und anschließend bei einer Temperatur von 140 °C über einen Zeitraum von 20 Minuten gehärteten Filmschichten sind in der Tabelle 8 wiedergegeben.

**Tabelle 6, Tauchlacke**

| | T1 | T2 | T3 |
|---|---|---|---|
| Filmdicke | 20 - 25 µm | 20 µm | 20 µm |
| Schlagtiefung (cm/kg) DIN EN ISO 6272 | ≥ 70 | ≥ 70 | ≥ 70 |
| Erichsentiefung (mm) DIN EN ISO 1520 | ≥ 6 | ≥ 6 | ≥ 6 |
| Korrosionssfestigkeit Salzsprühnebelprüfung DIN EN ISO 9227 | Nach 750 h < 1 mm | Nach 750 h < 0.5 mm | Nach 750 h < 0.5 mm |

## Patentansprüche

1. Tauchlacksystem für eine kathodische Tauchlackierung, umfassend ein Bindemittel auf Basis von modifizierten, Ammoniumgruppen enthaltenden Epoxidharzen sowie eine Pigmentpaste, wobei das Bindemittel erhältlich ist durch
A. Umsetzung mindestens einer Diepoxidverbindung oder eines Gemisches aus Diepoxidverbindungen mit mindestens einem Mono- und/oder Diphenol oder einem Gemisch aus Mono- und/oder Diphenolen in Gegenwart eines Katalysators;
B. Addition mindestens eines organischen Amins;
C. Zugabe eines Vernetzungsmittels;
D. Neutralisieren der Mischung mit einer organischen Säure und
E. Umsetzung der neutralisierten Mischung mit Wasser,
**dadurch gekennzeichnet, dass**
das Bindemittel zusätzlich mindestens ein Organosilan, das keine Epoxidreaktion eingeht, insbesondere ein Aminoalkyl- oder Aminoalkylalkoxysilan, umfasst.

2. Tauchlacksystem nach Anspruch 1,
**dadurch gekennzeichnet, dass**
der Katalysator ein organisches Phosphin und/oder Phosphinsalz umfasst.

3. Tauchlacksystem nach Anspruch 1 oder 2,
**dadurch gekennzeichnet, dass**
das Bindemittel zusätzlich mono- oder polyfunktionelle Alkohole, insbesondere Alkylglykole oder Polyalkylglykolverbindungen, und/oder polyfunktionelle Carbonsäuren umfasst.

4. Tauchlacksystem nach einem der Ansprüche 1 bis 3,
**dadurch gekennzeichnet, dass**
das Vernetzungsmittel ein blockiertes Isocyanat ist, insbesondere ein mit einem Oxim in Gegenwart eines Katalysators in einem organischen Lösungsmittel umgesetztes Isocyanat.

5. Tauchlacksystem nach Anspruch 4,
**dadurch gekennzeichnet, dass**
der Katalysator ein- oder mehrwertige Metallsalze oder Metalloxide, insbesondere Oktoate, Hexoate oder Laurate des Wismuts oder Zinns, sowie Säurekatalysatoren, wie z.B. Dinonylnaphthalindisulfonsäure, Dinonylnaphthalinmonosulfonsäure, Dodecylbenzolsulfonsäure, para-Toluolsulfonsäure oder Phosphorsäure umfasst.

6. Tauchlacksystem nach einem der Ansprüche 1 bis 5,
**dadurch gekennzeichnet, dass**
die Pigmentpaste ein Reibharz, mindestens eine organische Säure, Pigmente, Füllstoffe und Wasser sowie Additive, wie z.B. Netzmittel, Entschäumer, Weichmacher oder organische Lösungsmittel, umfasst.

7. Tauchlacksystem nach einem der Ansprüche 1 bis 6,
**dadurch gekennzeichnet, dass**
die Pigmentpaste erhältlich ist durch
A. Umsetzung mindestens einer Diepoxidverbindung oder eines Gemisches aus Diepoxidverbindungen mit mindestens einem Mono- und/oder Diphenol oder einem Gemisch aus Mono und/oder Diphenolen in Gegenwart eines Katalysators;
B. Addition mindestens eines organischen Amins;
C. Neutralisierung der Mischung mit einer organischen Säure und
D. Dispergieren der neutralisierten Mischung in Wasser unter Zugabe Füllstoffen, Pigmenten und Additiven, wie z.B. Netzmitteln, Entschäumern und/oder organischen Lösungsmitteln.

8. Tauchlacksystem nach einem der Ansprüche 1 bis 7,
**dadurch gekennzeichnet, dass**
die Füllstoffe Silan-modifizierte Füllstoffe umfassen.

9. Tauchlacksystem nach einem der Ansprüche 1 bis 8,
**dadurch gekennzeichnet, dass**
das Reibharz zusätzlich mono- oder polyfunktionelle Alkohole, insbesondere Alkylglykole oder Polyalkylglykolverbindungen, und/oder polyfunktionelle Carbonsäuren umfasst.

10. Tauchlacksystem nach einem der Ansprüche 1 bis 9,
**dadurch gekennzeichnet, dass**
eine unter Verwendung des Tauchlacksystems auf einem nicht vorbehandelten Normalstahl erhaltene eingebrannte Lackschicht eine Korrosionsbeständigkeit mit einer Unterwanderung in der Salzsprühnebelprüfung nach DIN 50 021 SS (DIN EN ISO 9227) nach einer Prüfdauer von 750 Stunden von weniger als 1 mm aufweist.

11. Verfahren zur Herstellung eines Tauchlacksystems für kathodische Tauchlackierung, umfassend ein Bindemittel auf der Basis von modifizierten, Ammoniumgruppen enthaltenden Epoxidharzen sowie eine Pigmentpaste, wobei zur Herstellung des Bindemittels
A. mindestens eine Diepoxidverbindung oder ein Gemisch aus Diepoxidverbindungen mit
mindestens einem Mono- und/oder Diphenol oder einem Gemisch aus Mono- und/oder Diphenolen in Gegenwart eines Katalysators bei Temperaturen unterhalb von 160 °C umgesetzt werden,
B. anschließend das daraus resultierende Zwischenprodukt mit mindestens einem organischen Amin oder einer Mischung aus organischen Aminen bei einer Temperatur zwischen 80 und 180 °C zu einem EpoxidAmin-Addukt umgesetzt wird, das
C. bei Temperaturen unterhalb von 150 °C mit mindestens einem Vernetzungsmittel versetzt und anschließend
D. mit einer organischen Säure neutralisiert und mit Wasser umgesetzt wird,
**dadurch gekennzeichnet, dass**
in der Stufe C) vor oder nach der Zugabe des Vernetzungsmittels mindestens ein Organosilan, das keine Epoxidreaktion eingeht, insbesondere ein Aminoalkyl- oder ein Aminoalkylalkoxysilan, zugegeben wird.

12. Verfahren nach Anspruch 11,
**dadurch gekennzeichnet, dass**
der Katalysator ein organisches Phosphin und/oder ein Phosphinsalz ist.

13. Verfahren nach Anspruch 11 oder 12,
**dadurch gekennzeichnet, dass**
das in den Stufen B) und/oder C) zusätzlich mono- oder polyfunktionelle Alkohole, insbesondere Alkylglykole oder Polyalkylglykolverbindungen, oder polyfunktionelle Carbonsäuren zugegeben werden.

14. Verfahren nach einem der Ansprüche 11 bis 13,
**dadurch gekennzeichnet, dass**
in der Stufe C) nach Zugabe des Vernetzungsmittels der Mischung mindestens ein zusätzliches Amin, insbesondere ein Amin Diketimin und/oder ein Methylethanolamin, zugegeben wird.

15. Verwendung eines Tauchlacksystems nach einem der Ansprüche 1 bis 10 zur Beschichtung von metallischen Oberflächen,
**dadurch gekennzeichnet, dass**
die Abscheidung des Lackes stufenweise bei unterschiedlichen Spannungen erfolgt, wobei zunächst bei einer Spannung zwischen 10 und 100 V eine Silanisierung der Metalloberfläche erfolgt und die Aufbringung des Lackfilms anschließend bei einer Spannung zwischen 100 und 400 V stattfindet.

16. Verwendung eines Tauchlacksystems nach einem der Ansprüche 1 bis 10,
**dadurch gekennzeichnet, dass**
die Abscheidung des Lackes pulsierend erfolgt, wobei periodisch zwischen einem unteren Spannungsbereich von 10 bis 100 V und einem oberen Spannungsbereich von 100 bis 400 V gewechselt wird.
